Europäisches Patentamt

European Patent Office

Office européen des brevets

(19)

(11) Publication number: **0 035 308**
**B1**

(12)

# EUROPEAN PATENT SPECIFICATION

(45) Date of publication of patent specification: **28.08.85**

(51) Int. Cl.⁴: **G 01 P 13/02**

(21) Application number: **81200216.0**

(22) Date of filing: **24.02.81**

(54) Wind direction indicator.

(30) Priority: **05.03.80 NL 8001336**

(43) Date of publication of application:
**09.09.81 Bulletin 81/36**

(45) Publication of the grant of the patent:
**28.08.85 Bulletin 85/35**

(84) Designated Contracting States:
**DE FR GB SE**

(56) References cited:
**CH-A- 613 282**
**DE-B-2 157 950**
**DE-C- 190 519**
**US-A-3 277 706**
**US-A-3 572 116**

**RADIO & ELECTRONIC ENGINEER, vol. 43, no. 12, December 1973 London, GB J. ELLIOT "The computation of the best windward and running courses for sailing yachts" pages 715-719**

(73) Proprietor: **Kuipers, Pieter Geert**
**Amerikalaan 50**
**NL-5691 KE SON (NL)**

(72) Inventor: **Kuipers, Pieter Geert**
**Amerikalaan 50**
**NL-5691 KE SON (NL)**

Courier Press, Leamington Spa, England.

## Description

The invention relates to an apparent wind direction indicator especially suited for sailing boats when sailing close-hauled. In order to obtain the maximum projected boat speed in the true wind direction (velocity made good to windward) it is important when sailing closehauled to steer a rather constant angle to the apparent wind. The apparent wind is the wind observed on board and which is the vectorial difference of true wind speed and boatspeed. A modern sailing yacht is capable of sailing with an angle to the true wind as small as 40° to 45°. The velocity made good to windward (Vmg), shows an optimum at an apparent wind angle of around 30°. This optimum apparent wind angle is nearly a ships constant. The helmsman has to steer this constant angle to the apparent wind for the best result. As the wind varies continuously in strength and direction and as also the boat speed is not constant a dynamic optimizing process is needed when steering closehauled. The following aids are available for this process:

1. The rather individual sense for closehauled sailing. Even in the dark it is possible to know and feel when the ship is sailing about right.

2. The simple windvane or burgee in the masttop eventually provided with some indicators for windward sailing (ref. CH—A—613 282).

3. The masttop windvane with electrical transducer for remote wind direction indication.

4. Woolen threads, tufts or telltales on both sides of the foresail, close to the leading edge, indicating optimal airflow for maximum drive when laying parallel to the sail.

The aforementioned methods all have their specific advantages and disadvantages especially as regard cost, precision, readability. Inaccuracies may become unacceptable however in light weather when there is a swell running and when sailing at night.

The invention combines the following requirements:

— low cost.
— simple maintenance.
— visual indication in the field of view of the helmsman.
— suitable for sailing at night.
— high precision (1° to 2°).
— very clear steering-indication, also in light weather and in a swell at either tack, starboard or port.
— easily adjustable for optimum wind angle.
— robust.

The invention is characterized by a cage-like rotor provided with radial blades rotating around a vertical spindle and surrounded by a stationary cylindrical drum provided with a vertical slit and another opening to allow the air to pass the rotorblades in such a way that the direction and speed of rotation of the rotor gives an indication of the deviation of the apparent wind direction with respect to a neutral or reference direction determined by a position of the slit at which the rotor stands still (claim 1).

The invention is based on the following principle. A rotating cage is used instead of a stationary wind direction indicator. The direction of rotation of the cage is determined by the wind direction. By means of a helical strip (barber's pole) this direction of rotation is visualized (claim 5). The rotor consists of a cage with e.g. 12 radial blades parallel to the rotor axis. Placing this rotor with its axis vertical in a windfield will not have any effect, however surrounding this rotor with a transparent cylindrical drum with suitable vertical slits there may be created a plane of symmetry through the axis of the rotor. If now the wind arrives at an angle to this plane of symmetry the rotor will start to rotate.

By proper shaping and positioning of these slits the sensitivity and the reversing points of the rotation may be chosen. Furthermore one may choose for a clock- or counterclockwise helical indicator band on the rotor relating the direction of rotation to the steering correction to be carried out over starboard or port respectively. For example an upward helical rotation could be correlated with an indication to sail more close winded (pointing higher) and reverse.

It is practical to have an indicator for each tack with a clock and a counterclock helical band on the rotor respectively. Thus the indicators may be individually adjusted for optimum result.

The invention will be explained by means of a drawing showing examples of application.

The indicator according to the invention consists of a cage-like rotor 1 and a stationary cylindrical drum 2, which have, for the sake of clarity, been drawn vertically separated. The rotor is provided with a vertical spindle 3 and a number of radial inward pointed blades or lamellae 4. Besides a contrasting helical band or strip 5 is fastened to the blades or is painted on to the blades, facilitating the observation of the direction of rotation of the rotor. The cylindrical transparent drum 2 contains two diametrically opposed slits 6 and 7 to allow the wind to pass. In the bottom and the top of the drum glassbearings 8 are fitted to receive the rotor spindle 3. The bottom of the drum contains draining holes 9 for possible spray water.

In use the rotor 1 will rotate freely around spindle 3 supported by the glassbearings 8 which are mounted in the drum 2. The rotor will be made of light weight material, whilst its inertia will be chosen in accordance with the steering response time of the ship. When the wind direction coincides with a plane through the centre lines of the slits 6 and 7 the rotor blades will experience equal but opposing forces, consequently the rotor will stand still. This direction will be referred to as "neutral or reference direction". The indicator is put on board of the ship and adjusted in such a way that its neutral direction corresponds with the optimum angle that the ship sailing closehauled should follow. In other words the plane through the centre lines of the slits 6 and 7 of the drum is directed at an angle of between 27° and 33° (ship dependent) to the longitudinal axis of the ship. If now the wind direction deviates from the neutral or reference direction the rotor will start rotating clock or counterclockwise which is made visible by means of the helical band 5 showing a striped pattern that moves upward or downward.

As long as the helmsman achieves steering a course with a minimum rotor movement he will be close to the neutral or reference course. Under normal sailing conditions the cylindrical drum should contain two opposing slits of dissimilar width of which the widest slit is opposing the apparent wind direction (claim 2). In strong winds the sensitivity of the indicator may be reduced by decreasing the width w of the wind opposing slit 7 (claim 4). This width may also be controlled by using a second surrounding cylindrical drum with similar slits and turning the drums relative to one another (not drawn). It is also possible to construct an indicator with two neutral or reference directions so that with one and the same indicator closehauled sailing at either tack is feasible. Three slits will be needed for this modification viz. one for starboard, one for port and one at the backside of the drum (claim 3). The advantage of such a single indicator is partly offset by a reduced sensitivity and a more difficult visibility for the helmsman. Except direct visualization by a helical band or strip 5 an electrical tacho generator may be coupled to the rotor enabling electronic processing for remote indication or controlling a selfsteering device (claim 6).

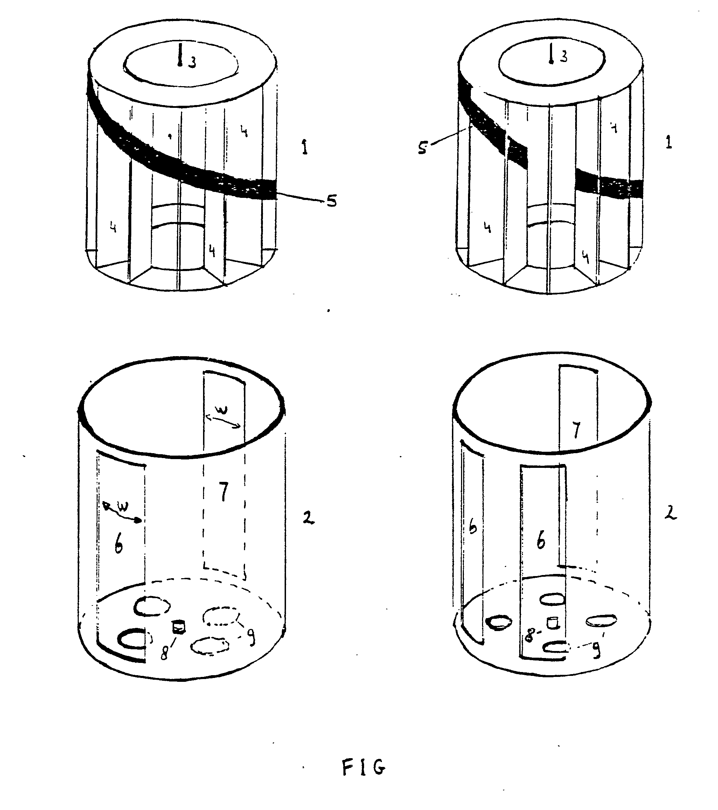

### Claims

1. Apparent wind direction indicator especially suited for closehauled sailing with sailing boats characterized in that a cage-like rotor is provided with radial blades rotating around a vertical spindle and is surrounded by a stationary cylindrical drum provided with one vertical slit and another opening to allow the air to pass the rotorblades in such a way that the direction and speed of rotation of the rotor gives an indication of the deviation of the apparent wind direction with respect to a neutral or reference direction determined by a position of the slit at which the rotor stands still.

2. Indicator according to claim 1 characterized in that the cylindrical drum is provided with a second slit, the two slits being positioned on opposite sides of the cylindrical drum and being of dissimilar width, the widest slit being the apparent wind opposing slit.

3. Indicator according to claim 1 characterized in that the cylindrical drum is provided with a second and a third vertical slit, the three slits being positioned in such a way that the first slit is opposing the apparent wind direction on a port tack, that the second slit is opposing the apparent wind direction on a starboard tack, whereas the third slit is turned away from the apparent wind direction allowing for a neutral or reference direction for either tack in closehauled sailing.

4. Indicator according to claim 2 characterized in that the apparent wind opposing slit is adjustable in width.

5. Indicator according to one of the preceding claims characterized in that the rotor is provided with a contrasting helical band, the axis of which corresponds to the axis of the rotor and in that the cylindrical drum is transparent in order to allow a visual detection of the direction of rotation.

6. Indicator in accordance with one of the preceding claims characterized in that the rotor is provided with an electrical tacho-generator in order to indicate the direction of rotation at a remote place or facilitate selfsteering.

### Revendications

1. Indicateur de direction apparente du vent convenant notamment pour la navigation à la bouline avec des bateaux à voiles, caractérisé en ce qu'il est prévu un rotor en forme de cage muni de lames radiales et tournant autour d'un arbre vertical et en ce que ledit rotor est entouré d'un tambour cylindrique stationnaire présentant une fente verticale ainsi qu'une autre ouverture pour permettre à l'air de passer sur les lames de rotor de façon que le sens et la vitesse de rotation du rotor fournissent une indication sur la déviation de la direction apparente du vent par rapport à une direction neutre ou de référence déterminée par position de fente dans laquelle le rotor est arrêté.

2. Indicateur selon la revendication 1, caractérisé en ce que le tambour cylindrique présente un deuxième fente, les deux fentes étant positionnées de côtés opposés du tambour cylindrique, alors que leurs largeurs sont dissemblables et que la fente la plus large est située face à la direction apparent du vent.

3. Indicateur selon la revendication 1, caractérisé en ce que le tambour cylindrique présente une deuxième et une troisième fente verticale, les trois fentes étant positionnées de façon que la première fente soit située face à la direction apparente du vent d'un côté bâbord, en ce que la deuxième fente est située face à la direction apparente du vent d'un côté tribord, tandis que la troisième fente est située du côté opposé à la direction apparente du vent de façon à tenir compte d'une direction neutre ou de référence pour chaque bord lors de la navigation à la bouline.

4. Indicateur selon la revendication 2, caractérisé en ce que la fente située face au vent apparent a une largeur réglable.

5. Indicateur selon l'une des revendications précédentes, caractérisé en ce que le rotor est muni d'une bande hélicoïdale contrastante dont l'axe correspond à l'axe du rotor et en ce que le tambour cylindrique est transparent pour permettre une détection visuelle du sens de rotation.

6. Indicateur selon l'une quelconque des revendications précédentes , caractérisé en ce que le rotor est muni d'un générateur tachymétrique électrique pour indiquer le sens de rotation à distance ou pour faciliter la gouverne automatique.

## Patentansprüche

1. Scheinwind-Richtungsanzeiger, insbesondere beim am Winde Segeln mit Segelschiffen, dadurch gekennzeichnet, dass ein käfigartiger Läufer mit um eine vertikale Achse drehenden Flügeln versehen und von einer stationären Trommel mit einem vertikalen Schlitz und einer weiteren Öffnung umgeben ist, wodurch die Luft die Läuferflügel derart passieren kann, dass die Läuferdrehrichtung und die Läuferdrehgeschwindigkeit einen Hinweis auf die Abweichung der scheinbaren Windrichtung in bezug auf eine neutrale oder Bezugsrichtung, die durch eine Stellung des Schlitzes bestimmt wird, bei der der Läufer stillsteht.

2. Richtungsanzeiger nach Anspruch 1, dadurch gekennzeichnet, dass die zylindrische Trommel mit einem zweiten Schlitz versehen ist, wobei die beiden Schlitze an einander gegenüberliegenden Seiten der Zylindertrommel angeordnet sind und eine ungleiche Breite haben, und der breitere Schlitz der dem scheinbaren Wind gegenüberliegenden Schlitz ist.

3. Richtungsanzeiger nach Anspruch 1, dadurch gekennzeichnet, dass die Zylindertrommel mit einem zweiten und einem dritten vertikalen Schlitz versehen ist, wobei die drei Schlitze derart angeordnet sind, dass der erste Schlitz dem scheinbaren Wind bei Backbordkurs und er zweite Schlitz dem scheinbaren Wind bei Steuerbordkurs gegenüberliegt, während der dritte Schlitz von der Scheinwindrichtung weggedreht und in eine neutrale oder Bezugsrichtung bei einem beliebigen Kurs eines am Winde liegenden Schiffes gebracht werden kann.

4. Richtungsanzeiger nach Anspruch 2, dadurch gekennzeichnet, dass die Breite des dem scheinbaren Wind gegenüberliegenden Schlitzes einstellbar ist.

5. Richtungsanzeiger nach einem oder mehreren der vorangehenden Ansprüche, dadurch gekennzeichnet, dass der Läufer mit einem kontrastierenden, schraubenförmigen Band versehen ist, dessen Achse der Läuferachse entspricht, und dass die Zylindertrommel durchsichtig ist, um ein visuelles Detektieren der Drehrichtung zu ermöglichen.

6. Richtungsanzeiger nach einem oder mehreren der vorangehenden Ansprüche, dadurch gekennzeichnet, dass der Läufer mit einem elektrischen Tacho-Generator ausgerüstet ist, der die Drehrichtung an einer entfernten Stelle angibt oder die Eigensteuerung erleichtert.

FIG